Europäisches Patentamt

European Patent Office

Office européen des brevets

(19)

(11) Publication number: **0 012 000**
**B1**

(12)          **EUROPEAN PATENT SPECIFICATION**

(45) Date of publication of patent specification: **26.01.83**

(21) Application number: **79302688.1**

(22) Date of filing: **23.11.79**

(51) Int. Cl.³: **B 08 B 17/00, C 02 F 1/48,**
**C 23 F 14/00**

(54) **Prevention of deposits on metal surfaces.**

(30) Priority: **24.11.78 US 963611**

(43) Date of publication of application:
**11.06.80 Bulletin 80/12**

(45) Publication of the grant of the patent:
**26.01.83 Bulletin 83/4**

(84) Designated Contracting States:
**BE CH DE FR GB IT NL SE**

(56) References cited:
**DE - A - 2 708 240**
**FR - A - 2 303 857**
**FR - A - 2 391 102**
**FR - A - 2 391 904**
**US - A - 3 303 118**
**US - A - 3 458 415**
**US - A - 3 740 192**

(73) Proprietor: **DIAMOND SHAMROCK**
**CORPORATION**
**1100 Superior Avenue**
**Cleveland Ohio 44114 (US)**

(72) Inventor: **Bennett, John Edwin**
**1806 West Jackson Street**
**Painesville, Ohio (US)**
Inventor: **Elliott, Joseph Edward**
**180 Coventry Road**
**Painesville, Ohio (US)**

(74) Representative: **Oliver, Roy Edward et al,**
**POLLAK, MERCER & TENCH High Holborn House**
**52-54 High Holborn**
**London WC1V 6RY (GB)**

Courier Press, Leamington Spa, England.

## Prevention of deposits on metal surfaces

### Background of the invention

Maintaining metallic surfaces clear and free of deposits has long been a universal problem. Metallic surfaces made from valve metals or the so-called "film-forming" metals such as titanium, tantalum, zirconium, aluminium, niobium and tungsten are, under most circumstances, quite immune to normal corrosion and thus such materials are widely used as heat exchange surfaces. However, such surfaces as well as other electroconductive surfaces such as other metals or graphite are vulnerable to biofouling, as well as to scale formation, i.e. deposits of biological and/or chemical origin, which deposits interfere with heat transfer, impede fluid control, corrode the metal surfaces and cause other serious and undesirable effects. Such deposits may be of the alkaline type, such as metal carbonates, or they may be marine growth, such as barnacles, algae and the like. All such deposits, whether they are in a soft, semi-soft, or hardened condition, must be removed to enable efficient heat exchange operation to be continued. Thus, once the deposits become a problem, the equipment must be shut down and operation terminated until the deposits are removed from the heat exchange surfaces. Various means for removing deposits from metallic surfaces have been employed in the past. Most prominent and still prominent today is the shutting down of such fouled equipment and either mechanically scraping away the deposits or acid washing the equipment to remove such deposits. Both of these treatments involve significant loss of operational time, owing to the necessary complete shutdown of the equipment. Where the deposits are due to the formation of calcium and/or magnesium scale, water softeners and conditioners may be used to reduce the rate or amount of formation of such scale. However, such means are quite expensive and are often incapable of completely preventing the formation of such scale deposits.

Another method of keeping the surfaces of heat exchangers clear is continuously to subject the surfaces to treatment with chlorine or sodium hypochlorite, which can be generated in situ. Such treatment prevents the growth of algae and barnacle incrustation. Normally, chlorine is added to the system, although it can be manufactured in situ if the liquid used in the system is capable of passing a current and contains salt or some other chlorine producer. Typical of such systems is that described in U.S. Patent Specification 3,241,512, which prevents the fouling of ship surfaces electrolytically, by the electrolysis of salt water to produce chlorine gas, which is distributed over the ship hull and so keeps the surface clean, while removing and/or preventing the deposition of barnacles, algae and other foreign and undesirable material. In the system disclosed, copper electrodes are used, which also provide dissolved copper ions which likewise assist in preventing fouling. Other prior art describes similar processes wherein dimensionally-stable anodes are used for producing chlorine in situ to prevent fouling.

### Brief summary of the invention

The essence of the present invention is the electrolysis of water at the appropriate voltages and current values to produce the requisite amounts of oxygen and hydrogen ions per unit time to prevent deposit formation on the surface of the metal, the voltages being insufficient to electrolyze any salt present in the electrolyte and thereby avoid the formation of chlorine gas. The hydrogen ions produced by the electrolysis, along with possibly nascent oxygen, continuously produce a skin layer of electrolyte, which is highly acid and is effective in preventing the deposition of hardness scale as well as biofouling. When the metallic surface to be protected is a valve metal, such as titanium, it is preferably coated with a stable catalytic coating which is capable, at extremely low current flows and voltages, of producing an effective quantity of oxygen and hydrogen ion to prevent hardness scale and/or biofouling.

### Detailed description of the invention

According to the method of the invention, a metallic surface is maintained free of biological and/or hardness deposits in an aqueous saline environment, by making the metallic surface anodic so as to electrolyze water in contact therewith to produce sufficient oxygen and hydrogen ion at the anodic metallic surface to prevent formation of biological and/or hardness deposits but without the evolution of chlorine.

According to an especially preferred embodiment of the invention, a valve metal surface is maintained free of biological and/or hardness deposits in an aqueous saline environment by applying to the surface of the valve metal a stable electrocatalytic coating which is capable, when made anodic, of generating an effective amount of oxygen to maintain the surface free from biological and/or hardness deposits with substantially no evolution of chlorine gas, and thereafter, when the coated valve metal surface is in the aqueous environment, rendering the coated surface anodic and passing sufficient current therethrough to generate such effective amount of oxygen per square metre of coated surface per hour with substantially no chlorine gas being generated.

The method of the present invention prevents both biological growth and hardness scale on metallic surfaces without the generation of toxic chemicals such as chlorine gas, which can damage life forms in an ocean environment, while at the same time avoiding dissolution of toxic metallic ions in an aqueous environment. The invention, therefore, has its greatest utility in processes where seawater is utilized in large quantities and returned to the ocean. For ease of description, therefore, the invention will be described with respect to its application in a seawater environment, although seawater is not a necessity in the broadest sense in the invention and any aqueous saline environment can be used.

The essence of the invention is the prevention of marine growth or hardness scale on a metallic surface. This is accomplished by making the surface anodic, so as to electrolyze the water in the electrolyte and thus evolve sufficient oxygen and hydrogen ion to prevent marine growth as well as hardness scale caused by calcium and magnesium compounds found as impurities in the electrolyte. The anodic electrochemical reaction under these circumstances is as follows:

$$2H_2O \rightarrow O_2 + 4H^+ + 4e^-$$

From this equation, it can be seen that 4 moles of hydrogen ion are generated for every mole of oxygen evolved. This generation of hydrogen ion creates a very low pH layer in the electrolyte immediately adjacent the surface of the metal anode. This acidic layer is believed to be responsible for the prevention of deposits on the anodic surface, although it is impossible to measure the actual pH in this region of high acidity, because it is extremely thin. However, indirect voltage measurements imply that the pH is in the range of approximately 1—3. It is also possible that an active intermediate, such as nascent oxygen may be in part responsible for inhibiting marine growth. Whatever the exact mechanism, however, numerous tests have borne out the fact that biofouling and hardness scale can be prevented at low current and voltage levels merely by the evolution of oxygen and hydrogen ion from water by electrolysis, without the need for the generation of chlorine. The ratio of oxygen and hydrogen ion produced by the electrolysis is fixed by the above reaction, but the amount required in order to be effective can vary greatly, depending upon a number of variables associated with the particular system to be protected from hardness scale and/or biofouling. Such variables include the degree of salinity of the electrolyte, the hardness content of the electrolyte, the temperature of the electrolyte, the flow rate of the electrolyte, the bioactivity of the electrolyte and the geometry of the system.

To keep a surface clean without the generation of toxic chemicals the surface must be maintained at a voltage which is less anodic than that which generates chlorine in the particular system concerned. For seawater, this voltage is 1.375 volts vs. NHE (1.133 volts vs. SCE). For less saline solutions, i.e., solutions containing less chloride ion, this threshold voltage at which chlorine would be produced is somewhat higher. Thus, in carrying out the invention, the voltage level must be at or below the threshold voltage for the electrolyte where chlorine would first be evolved. In addition, sufficient oxygen must be generated at the selected voltage below this threshold voltage for chlorine production effectively to prevent biological growth and/or hardness scale deposition. The amount of oxygen evolution under given voltage conditions will, of course, depend on the current flowing and the ability of the anodic metal surface to catalyze oxygen evolution. While lesser amounts of oxygen evolution will be effective in controlling hardness scale and biofouling under less stringent conditions, the preferred rate of oxygen evolution is at least 4.66 millimoles $O_2$ per hour per square metre for adequate protection over widely varying conditions. Most preferably, at least 10.0 millimoles $O_2$ per hour per square metre are evolved for protection under more stringent conditions.

Not all metallic surfaces are effective in carrying out the invention, since many begin to generate chlorine before sufficient oxygen generation can be effected. Thus, in order to practice the invention successfully on equipment having such metallic surfaces, a stable electro-catalytic coating must be applied to the anode, which will catalyze sufficient oxygen evolution at the selected voltage below the threshold voltage of the system for chlorine evolution.

The stable electrocatalytic coating may be one made of metals, alloys, metal oxides or mixtures thereof. Preferably, the electrocatalytic coating is selected from iridium, ruthenium, rhodium, delta manganese dioxide, noble metal alloy containing iridium, ruthenium or rhodium, and mixtures containing at least one noble metal oxide and at least one valve metal oxide. In the case of metal coatings, ruthenium and iridium are preferred. Metal coatings of platinum and palladium are inoperative in the practice of the invention, since chlorine is generated before sufficient quantities of oxygen per unit time are generated. Coatings of rhenium metal or alloys of rhenium and palladium are of marginal usefulness in the practice of the invention. While they are operable, the control of voltage and current must be extremely accurate in order to produce sufficient oxygen per unit time without evolution of chlorine.

Among metal oxide coatings useful in carrying out the invention are the so-called Beer coatings such as described in US—PS 3,632,498. These Beer coatings consist of a film-forming oxide and a platinum group oxide, a preferred coating of the Beer type comprising a mixture of titanium dioxide and ruthenium dioxide.

Other stable anodic coatings useful in carrying out the present invention are described in US—PS 3,751,296, 3,853,739, 3,855,092 and 4,005,003. These patents not only describe coatings which are non-passivating and electro-catalytic for oxygen production in salt water environments, but they also disclose various methods for applying the catalytic coatings to metallic surfaces. In the present case, the surface preferably is a film-forming metal, most preferably titanium. In any event, although a wide variety of catalytic coatings can be used in the present invention, it is still absolutely necessary to use one which is operable at a voltage below the threshold voltage at which chlorine is first evolved in the system and is also capable of producing sufficient oxygen, preferably 4.66 millimoles per hour per square metre of electrocatalytic coated surface area or more.

As stated earlier, the electrocatalytic dimensionally-stable coating may be applied in the various ways described in the cited patents, as well as by other methods obvious to those skilled in the art. However, a particularly preferred method of applying the coatings useful in the present invention is merely to apply a coating solution to the tubes constituting the heat exchange surface, whether internal or external, and then use resistance heating in the appropriate temperature using AC current. In this case, the valve metal tube is its own resistance heater and generates sufficient heat on application of alternating current to oxidize the coating solution applied to the surface of the valve metal tube. When coating tube bundles or other more difficult shapes, it should be borne in mind that it is more difficult to apply a proper coating to areas near welds. In tube bundles where the welds are at the entrance and the exit, this problem is greatest, because biological fouling is often worse at the entry to and exit from such tubes. In such cases, to ensure that these areas carry a proper coating, we prefer to apply a second or precautionary coating to such areas and simply flame-brush the areas to oxidize the coating material.

Another coating useful in the practice of the invention is that described in US Application Serial No. 890,374, now US—PS 4,180,445. This is an oxygen-selective anodic coating which consists of delta manganese dioxide. The delta form of manganese dioxide is highly oxygen-selective and, in fact, works oppositely to other forms of manganese dioxide, which tend to generate chlorine rather than oxygen in a seawater electrolysis situation. The delta manganese dioxide can be applied by placing the surface to be coated in an acidic saline solution, to which sufficient quantities of man-ganous ions have been added, and electrolyzing the saline solution so that the resultant amorphous or low crystallinity coating of manganese dioxide is generated on the anodic substrate to be coated. Initially chlorine will be generated but, when the surface is sufficiently coated with delta manganese dioxide, this chlorine evolution is completely replaced by oxygen evolution.

The prime usefulness of the invention appears to lie in maintaining heat exchange surface clear and free from biological and hardness deposits, so as to maximize and/or maintain highly efficient heat exchange characteristics. The anodic stable coatings applied to the heat exchange surfaces in order to carry out the invention are extremely thin and in no way interfere with the heat exchange properties of the system, except that they maintain high heat exchange efficiency by preventing the buildup of biological or hardness deposits on the heat exchange surfaces. While the invention is not detrimental to heat exchange properties, it has been observed on a number of occasions that use of the invention, in fact, improves the heat exchange properties of a given system, (by about 10%), perhaps due to the fact that the film effect of the liquid flowing through the heat exchanger is disrupted by the oxygen evolution on the anodic surface, leading to better heat transfer.

In many applications, it is not necessary for the surface to be protected from biological fouling and/or hardness deposits to be maintained anodic continuously. In such cases, the surface to be protected need be anodic only for a portion of any time period, depending on the particular heat exchange system, the degree of contamination of the cooling medium and other factors. In such instances, the anodic polarity would merely be interrupted over varying time periods, for example, by making the surface anodic once every 8 hours for a period of time sufficient to remove and/or prevent buildup of biological or hardness deposits. Likewise, the surface to be protected can rapidly be made anodic several times per second, if the contamination aspects of the cooling fluid or medium are appropriate. However, since the current utilized in carrying out the invention is extremely small, in most cases it will probably be most advantageous for the surface to be protected to be kept anodic at all times, unless the economic considerations of a given situation dictate otherwise.

Specific uses of the invention include the maintenance of heat exchange surfaces of coastal power stations or shipboard heat exchangers, where seawater is utilized as the cooling medium in the exchanger. In such heat exchangers, titanium is often the material of choice for construction of the heat exchangers. Another area where the invention shows significant promise is in so-called OTEC plants. The use of an Ocean Thermal Energy Conversion plant is one of several options being investigated by the Department of Energy to utilize solar energy effectively. Basically, this concept involves using the temperature difference between the warm surface water of tropical oceans and the deeper, colder water to operate a heat engine. It has been estimated that 4%—6% of the anticipated energy needs of the U.S. could be supplied by this concept by the year 2020. Such systems require large heat exchange surfaces and it now appears that titanium will be the material of choice for constructing these heat exchange systems. Methods which might be used to prevent the biofouling of OTEC plants are very limited. The use of chlorine and other biocides is not feasible, due to the enormous flow of seawater involved. Also, the environmental effect of such large quantities of chlorine or other biocides in the open ocean would be significant and highly detrimental to the ocean life in the vicinity of OTEC plants.

Another area for use of the invention is multistage flash evaporators used for the desalination of water. These evaporators are currently made of titanium and are in immediate need of an antifouling technique, to prevent the buildup of biological and hardness deposits so as to maintain their heat transfer characteristics. Fouling of their heat exchange surfaces with magnesium and calcium scale at present demands the use of high vacuum in order to reduce the boiling temperatures, resulting in high capital costs to minimize hardness deposits. In most case, acid is continuously added to the seawater feed in order to lower the pH to 5. Even with these precautions, the formation of hardness scale dictates frequent shutdowns for acid and mechanical cleaning, resulting to high maintenance costs. By use of the invention, the heat exchange surfaces can be maintained clear of deposits and also this allows the design of equipment to operate at higher temperatures, with greater heat transfer efficiency, significantly improving capital costs by allowing atmospheric pressure operation.

Still another area of use of the invention is geothermal power. Geothermal power plants are subject to conditions causing extreme corrosion and fouling. Titanium heat exchangers are used exclusively and are subject to severe hardness scaling. Use of the invention in such cases provides sufficient acidity of the heat exchange surface to prevent hardness deposits forming.

The following example illustrates the practice of the present invention and also defines the lower limit of effective protection when using seawater as found in the Fort Lauderdale, Florida, area (i.e. seawater containing salt and other dissolved solids such that the voltage at which chlorine is given off is about 1.136 volts versus SCE).

Example

A series of 10 centimetre square titanium test panels were coated with a stable anodic coating in the following manner. A master coating solution was prepared as follows:

| | |
|---|---|
| $RuCl_3 2.5H_2O$ (38.6% Ru) | 1.192 gm. |
| $SnCl_2$ (anhydrous) | 574 gm. |
| Butyl titanate (14.3% Ti) | 5.580 ml. |
| HCl (35%) | 760 ml. |
| Butanol | 11.220 ml. |

The solution was prepared by partially dissolving the tin and ruthenium salts in the HCl and adding the butanol. After stirring until the salts dissolved, the butyl titanate was added and the solution was again stirred to ensure complete intermixing. Analysis of the solution gave the following composition in grams per litre. Ru 25.5, Ti 44.3 and Sn 20. This represented a $TiO_2:(RuO_2+SnO_2)$ mole ratio of 2.2:1 and 40.0 mole percent of $SnO_2$ in $(RuO_2+SnO_2)$.

Portions of this master solution were applied to the titanium panels and these were then heated in air to a temperature of 450°C for 7 minutes. This procedure was repeated 10 more times, resulting in a final coating weight of 16 $g/m^2$ (1.5 grams per square foot) of anode surface on a $(RuO_2+SnO_2)$ basis.

Anodes prepared in this way were then installed below the water surface at a seawater intake near Fort Lauderdale, Florida. Six coated test panels were put into place and five were made anodic utilizing different current densities for each of the five panels. The sixth panel was not made anodic and functioned merely as a control. After five months on-line, the results were as given in the following Table.

### TABLE

| Panel number | $A/m^2$ | Millimoles oxygen per square meter hour evolved | Surface fouling |
|---|---|---|---|
| 1 | 10 | 93.2 | None |
| 2 | 3 | 27.96 | None |
| 3 | 1 | 9.32 | Slight edge growth only |
| 4 | 0.3 | 2.80 | Small amount |
| 5 | 0.1 | 0.93 | Completely covered |
| Control | 0 | 0 | Completely covered |

**Claims**

1. A method of maintaining a metallic surface free of biological and/or hardness deposits in an aqueous saline environment, which comprises making the metallic surface anodic so as to electrolyze water in contact therewith to produce sufficient oxygen and hydrogen ion at the anodic metallic surface to prevent formation of biological and/or hardness deposits but without the evolution of chlorine.

2. A method according to claim 1, wherein the electrolysis is conducted at an applied voltage below the threshold voltage at which chlorine is evolved.

3. A method of maintaining a valve metal surface free of biological and/or hardness deposits in an aqueous saline environment, which comprises applying to the surface of the valve metal a stable electrocatalytic coating which is capable, when made anodic, of generating an effective amount of oxygen to maintain the surface free from biological and/or hardness deposits with substantially no evolution of chlorine gas, and thereafter, when the coated valve metal surface is in the aqueous environment, rendering the coated surface anodic and passing sufficient current therethrough to generate such effective amount of oxygen per square metre of coated surface per hour with substantially no chlorine gas being generated.

4. A method according to claim 3, wherein the valve metal surface is a heat exchange surface.

5. A method according to claim 3 or 4, wherein the aqueous saline environment is provided by salt water to heat exchange contact with the coated valve metal surface.

6. A method according to claim 3, 4 or 5, wherein the electrocatalytic coating is selected from iridium, ruthenium, rhodium, delta manganese dioxide, noble metal alloy containing iridium, ruthenium or rhodium, and mixtures containing at least one noble metal oxide and at least one valve metal oxide.

7. A method according to any of claims 3 to 6, wherein the valve metal is titanium.

8. A method according to any preceding claim, wherein the oxygen is generated at the rate of at least 4.66 millimoles per hour per square metre of surface to be protected.

9. A method according to claim 8, wherein the oxygen is generated at the rate of at least 10.0 millimoles per hour per square metre of surface to be protected.

**Revendications**

1. Procédé de maintien d'une surface métallique exempte de dépôts biologiques et/ou tartreux dans un milieu aquex salin, caractérisé par le fait qu'il consiste essentiellement à faire de cette surface métallique une anode de manière à électrolyser l'eau qui est en contact avec elle afin de produire de l'oxygène et de l'hydrogène ionisé sur la surface métallique anodique, cela en quantité suffisante pour empêcher la formation de dépôts biologiques et/ou tartreux, mais sans qu'il y ait dégagement de chlore.

2. Procédé selon la revendication 1, caractérisé par le fait que l'électrolyse est conduite avec application d'une tension électrique inférieure à la tension de seuil pour laquelle du chlore se dégage.

3. Procédé pour maintenir une surface de métal-valve exempte de dépôts biologiques et/ou tartreux dans un milieu aqueux salin, caractérisé par le fait qu'il consiste essentiellement à appliquer à la surface du métal-valve un revêtement électrocatalytique stable qui est capable, lorsqu'il est rendu anodique, d'engendrer une quantité d'oxygène efficace pour maintenir la surface exempts de dépôt biologique et/ou tartreux, cela sans dégagement sensible de chlore gazeux, puis, lorsque la surface de métal-valve revêtue est immergée dans le milieu aqueux, à rendre anodique la surface revêtue et à faire passer un courant suffisant pour engendrer une telle quantité efficace d'oxygène par m2 de surface revêtue et par heure sensiblement sans génération de chlore gazeux.

4. Procédé selon la revendication 3, caractérisé par le fait que la surface de métal-valve est une surface d'échange de chaleur.

5 Procédé selon la revendication 3 ou 4, caractérisé par le fait que le milieu aqueux salin est constitué par de l'eau salée en contact d'échange thermique avec la surface de métal-valve revêtue.

6. Procédé selon la revendication 3, 4 ou 5, caractérisé par le fait que la substance de revêtement électrocatalytique est choisie parmi l'iridium, le ruthénium, le rhodium, le bioxyde de manganèse delta, les alliages de métal noble contenant de l'iridium, du ruthénium, ou du rhodium, et les mélanges contenant au moins un oxyde de métal noble et au moins un oxyde de métal-valve.

7. Procédé selon l'une quelconque des revendications 3 à 6, caractérisé par le fait que le métal-valve est le titane.

8. Procédé selon l'une quelconque des revendications précédentes, caractérisé par le fait que l'oxygène est engendré avec un débit d'au moins 4,66 millimoles par heure et par $m^2$ de surface à protéger.

9. Procédé selon la revendication 8, caractérisé par le fait que l'oxygène est engendré avec un débit d'au moins 10,0 millimoles par heure et par $m^2$ de surface à protéger.

**Patentansprüche**

1. Verfahren zur Reinhaltung einer metallischen Oberfläche von biologischen und/oder Härteablagerungen in einer wässrigen salzhaltigen Umgebung, dadurch gekennzeichnet, daß die metallische Oberfläche anodisch gemacht wird, so daß sie mit ihr in Berührung kommendes Wasser elektrolysiert und ohne Chlorentwicklung ausreichend Sauerstoff und Wasserstoffionen zur Unterdrückung der Bildung von biologischen und/oder Härteablagerungen produziert.

2. Verfahren nach Anspruch 1, dadurch gekennzeichnet, daß die Elektrolyse bei einer angelegten Spannung erfolgt, die unter dem Schwellenwert liegt, bei der Chlor entwickelt wird.

3. Verfahren zur Reinhaltung einer Ventilmetalloberfläche in einer wässrigen salzhaltigen Umgebung, dadurch gekennzeichnet, daß auf die Oberfläche des Ventilmetalls eine stabile elektrokatalytische Beschichtung aufgebracht wird, die, wenn sie anodisch gemacht wird, in der Lage ist, eine wirksame Menge Sauerstoff ohne wesentliche Chlorgasentwicklung zu entwickeln, um die Oberfläche frei von biologischen und/oder Härteablagerungen zu halten, und dann, wenn die beschichtete Ventilmetalloberfläche sich in der wässrigen Umgebung befindet, die beschichtete Oberfläche anodisch gemacht und ausreichend Strom durch sie geleitet wird, um die erwähnte wirksame Menge Sauerstoff je m² beschichtete Oberfläche je Stunde ohne wesentliche Chlorgasentwicklung zu entwickeln.

4. Verfahren nach Anspruch 3, dadurch gekennzeichnet, daß die Ventilmetalloberfläche eine Wärmeaustauscheroberfläche ist.

5. Verfahren nach Anspruch 3 oder 4, dadurch gekennzeichnet, daß die wässrige salzhaltige Umgebung von Salzwasser geliefert wird, das sich in Wärmeaustauschkontakt mit der beschichteten Ventilmetalloberfläche befindet.

6. Verfahren nach Anspruch 3, 4 oder 5, dadurch gekennzeichnet, daß die elektrokatalytische Beschichtung ausgewählt ist aus Iridium, Ruthenium, Rhodium, δ-Mangandioxid, Edelmetallegierungen, die Iridium, Ruthenium oder Rhodium enthalten, und Mischungen, die mindestens ein Edelmetalloxid und mindestens ein Ventilmetalloxid enthalten.

7. Verfahren nach jedem der Ansprüche 3 bis 6, dadurch gekennzeichnet, daß das Ventilmetall Titan ist.

8. Verfahren nach jedem vorangegangenen Anspruch, dadurch gekennzeichnet, daß Sauerstoff mit einer Rate von mindestens 4,55 mMol je Stunde und m² zu schützender Oberfläche entwickelt wird.

9. Verfahren nach Anspruch 8, dadurch gekennzeichnet, daß Sauerstoff mit einer Rate von mindestens 10,0 mMol je Stunde und m² zu schützender Oberfläche entwickelt wird.